(19) Europäisches Patentamt
European Patent Office
Office européen des brevets

(11) **EP 0 729 661 B1**

(12) **EUROPÄISCHE PATENTSCHRIFT**

(45) Veröffentlichungstag und Bekanntmachung des Hinweises auf die Patenterteilung:
**23.07.1997 Patentblatt 1997/30**

(51) Int Cl.6: **H02H 9/08**

(21) Anmeldenummer: **94930109.7**

(86) Internationale Anmeldenummer:
**PCT/AT94/00158**

(22) Anmeldetag: **27.10.1994**

(87) Internationale Veröffentlichungsnummer:
**WO 95/14322 (26.05.1995 Gazette 1995/22)**

(54) **VERFAHREN ZUR RESONANZABSTIMMUNG VON ERDSCHLUSSLÖSCHSPULEN**

METHOD FOR THE RESONANCE MATCHING OF PETERSEN COILS

PROCEDE D'ADAPTATION DE RESONANCE POUR BOBINES PETERSEN

(84) Benannte Vertragsstaaten:
**AT CH DE DK ES FR IE IT LI NL SE**

(30) Priorität: **16.11.1993 AT 2315/93**

(43) Veröffentlichungstag der Anmeldung:
**04.09.1996 Patentblatt 1996/36**

(73) Patentinhaber: **Haefely Trench Austria GmbH A-4060 Leonding (AT)**

(72) Erfinder:
• **PAPP, Klaus A-4040 Linz (AT)**

• **DRUML, Gernot A-4020 Linz (AT)**

(74) Vertreter: **Weiser, Andreas et al Patentanwälte Schütz u.Partner, Fleischmanngasse 9 1040 Wien (AT)**

(56) Entgegenhaltungen:
**DE-A- 3 643 391**

**Beschreibung**

Die Erfindung betrifft ein Verfahren zur Resonanzabstimmung der Erdschlußlöschspule eines gelöscht betriebenen Drehstromnetzes im Falle eines einpoligen Erdschlusses auf einer der von einer Sammelschiene abgehenden Leitungen.

Hochspannungsnetze mit einer Betriebsspannung bis einschließlich 110 kV werden vielfach mit sogenannten Erdschlußlöschspulen betrieben. Das Prinzip der Erdschlußlöschung wurde von W. Petersen im Jahre 1917 erfunden.

Darunter wird eine Anordnung verstanden, bei welcher der Sternpunkt des Transformators über eine Drosselspule mit der Erde verbunden wird. Die Induktivität der Drosselspule wird so gewählt, daß der bei einem Erdschluß einer Leitung zur Erde abfließende kapazitive Strom durch einen gleich großen, entgegengesetzten Strom von der Drosselspule kompensiert wird, wodurch Lichtbogenerdschlüsse selbsttätig, d.h. ohne Schalthandlungen, zum Verlöschen kommen.

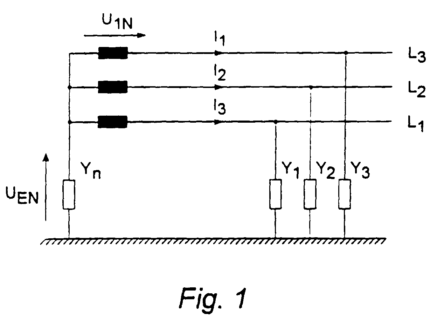

In Fig. 1 ist das Ersatzschaltbild eines solzhen Drehstromsystems mit induktiv geerdetem Sternpunkt dargestellt. $Y_N = G_N + jB_N$ ist die Admittanz der Erdschlußlöschspule, welche zwischen Sternpunkt und Erde geschaltet ist, und $Y_1$, $Y_2$ und $Y_3$ sind die Admittanzen der drei Phasenleiter $L_1$, $L_2$ und $L_3$ gegen Erde, welche im wesentlichen aus den Erdkapazitäten der Phasenleiter bestehen. Im folgenden werden die Begriffe "Leitung" und "Leitungsabgang" für eine Drehstromleitung mit 3 Phasenleitern $L_1$, $L_2$ und $L_3$ verwendet.

Die auf die Phasenspannung $U_{1N}$ des Netzes bezogene Spannung $U_{2N}$ des Sternpunktes gegen Erde, im folgenden als relative Sternpunktspannung $u_{EN}$ bezeichnet, läßt sich ausdrücken als

$$\frac{U_{EN}}{U_{1N}} = u_{EN} = \frac{Y_1 + a^2 Y_2 + a Y_3}{Y_1 + Y_2 + Y_3 + Y_N} \qquad \left(\text{mit } a = \frac{-1 + j\sqrt{3}}{2}\right)$$

Werden in dieser Gleichung die Erdkapazitäten der Leitungen, die Dämpfungswiderstände und die Induktivität der Löschspule eingeführt, so läßt sich das System auf einen bedämpften Parallelschwingkreis bestehend aus der Erdkapazität des Netzes und der Induktivität der Löschspule zurückführen, welcher für den Fall des erdschlußfreien Netzbetriebes über eine hochohmige Impedanz von der Phasenspannung gespeist wird.

Wird der Verlauf von $u_{EN}$ in Abhängigkeit von der Admittanz der Löschspule dargestellt, so weist $u_{EN}$ bei Resonanzabstimmung ein Maximum auf. Durch Messung und Auswertung der relativen Sternpunktspannung $u_{EN}$ läßt sich somit die Resonanzabstimmung der Löschspule ermitteln (vgl. DE-A-3 643 391).

Während $u_{EN}$ im erdschlußfreien Netzbetrieb typisch im Bereich von 0,01 bis 0,1 liegt, nimmt $u_{EN}$ im Erdschlußfall mit vernachlässigbarem Fehlerwiderstand, unabhängig von der Admittanz der Erdschlußlöschspule, den Wert 1 an. Dies ist in der obenstehenden Gleichung erkennbar, wenn beispielsweise der Erdschluß in der Phase $L_1$ auftritt und in der Folge $Y_1$ über alle Grenzen zunimmt. Die Abstimmung der Spule mit Hilfe der relativen Sternpunktspannung versagt daher im Erdschlußfall, da das Meßkriterium fehlt.

Gerade im Erdschlußfall wäre aber eine Abstimmung der Erdschlußlöschspule überaus wünschenswert, weil die Suche nach dem Ort des Erdschlusses in der Praxis das Zu- und Wegschalten von Leitungsteilen erforderlich macht, was zu einer erneuten Verstimmung des Schwingkreissystems mit der Folge eines hohen Gefahrenpotentials am Erdschlußort führen kann.

Die Erfindung setzt sich zum Ziel, ein Verfahren zu schaffen, welches die Abstimmung der Erdschlußlöschspule im Erdschlußfall ermöglicht.

Dieses Ziel wird erfindungsgemäß mit einem Verfahren der einleitend genannten Art erreicht, das sich dadurch auszeichnet, daß die fehlerbehaftete Leitung am sammelschienenfernen Leitungsende mit einer zweiten, von der Sammelschiene abgehenden Leitung zu einem Ring zusammengeschaltet wird, und daß die Summenströme $I_{S1}$ und $I_{S2}$ der beiden Leitungen am sammelschienenseitigen Leitungsende in Abhängigkeit von einer Verstimmung der Admittanz der Erdschlußlöschspule gemessen und verglichen werden, wobei eine Übereinstimmung der Summenströme die Resonanzabstimmung der Erdschlußlöschspule angibt.

In der vorliegenden Beschreibung wird mit "Summenstrom" die vektorielle Summe der Phasenströme einer Leitung, $I_S = I_1 + I_2 + I_3$, bezeichnet.

Das Aufsuchen der Übereinstimmung der Summenströme und damit der Resonanzbedingung kann wesentlich vereinfacht werden, wenn gemäß einer bevorzugten Weiterbildung des erfindungsgemäßen Verfahrens die Summenströme der beiden Leitungen am sammelschienenseitigen Leitungsende bei zumindest zwei unterschiedlichen, ausgewählten Werten der Admittanz der Erdschlußlöschspule gemessen und auf die jeweilige Sternpunktspannung der betreffenden Leitung bei diesem Admittanzwert quotentiell bezogen werden, die erhaltenen Meßwertepaare jeder Leitung zur Aufstellung einer von der Admittanz der Erdschlußlöschspule abhängigen Geradenfunktion für jede Leitung herangezogen werden, und der Schnittpunkt dieser beiden Geradenfunktionen ermittelt wird, welcher den Admittanzwert für die Resonanzabstimmung der Erdschlußlöschspule angibt.

Eine besonders vorteilhafte Ausführungsform des erfindungsgemäßen Verfahrens eröffnet die Möglichkeit, auch den Ort des Erdschlusses auf der fehlerbehafteten Leitung zu ermitteln: Aus dem Verhältnis der Steigung der Geradenfunktion für die fehlerfreie Leitung der Ringschaltung zu der Summe der Steigungen der Geradenfunktionen beider Leitungen der Ringschaltung kann der Ort des Erdschlusses auf der fehlerbehafteten Leitung bestimmt werden.

Das erfindungsgemäße Verfahren wird nachstehend unter Bezugnahme auf die Zeichnungen näher erläutert, in denen zeigen:

Fig.1 das Ersatzschaltbild eines dreiphasigen Drehstromsystems mit induktiv geerdetem Sternpunkt;

Fig.2a das einpolige Ersatzschaltbild eines Hochspannungsnetzes mit drei abgehenden dreiphasigen Stichleitungen $A_1$, $A_2$, $A_3$ und isoliertem Sternpunkt;

Fig.2b das einpolige Ersatzschaltbild eines Hochspannungsnetzes mit drei abgehenden dreiphasigen Stichleitungen $A_1$, $A_2$, $A_3$ und induktiv geerdetem Sternpunkt; die

Fig.3a und 3b die Verteilung der Summenströme der Stichleitungen der Netze von Fig.2a bzw. 2b in Abhängigkeit vom Ort auf der Leitung für den Fall eines einpoligen Erdschlusses; die

Fig.4a und 4b die Summenstromverteilung für die Netze von Fig.2a bzw. 2b, wenn die einem Erdschluß unterliegende Stichleitung am sammelschienenfernen Ende mit einer der anderen Stichleitungen zu einem Ring geschaltet wird;

Fig.5 ein Diagramm, das für den Meßpunkt $X_0$ am Ort der Sammelschiene die Abhängigkeit der beiden in Fig.4b betrachteten Summenströme $I_{Si}$ von der Admittanz $Y_N$ der Erdschlußlöschspule veranschaulicht; und

Fig.6 ein Diagramm, das die in Fig.5 dargestellte Abhängigkeit bezogen auf die Sternpunktspannung $U_{EN}$ zeigt.

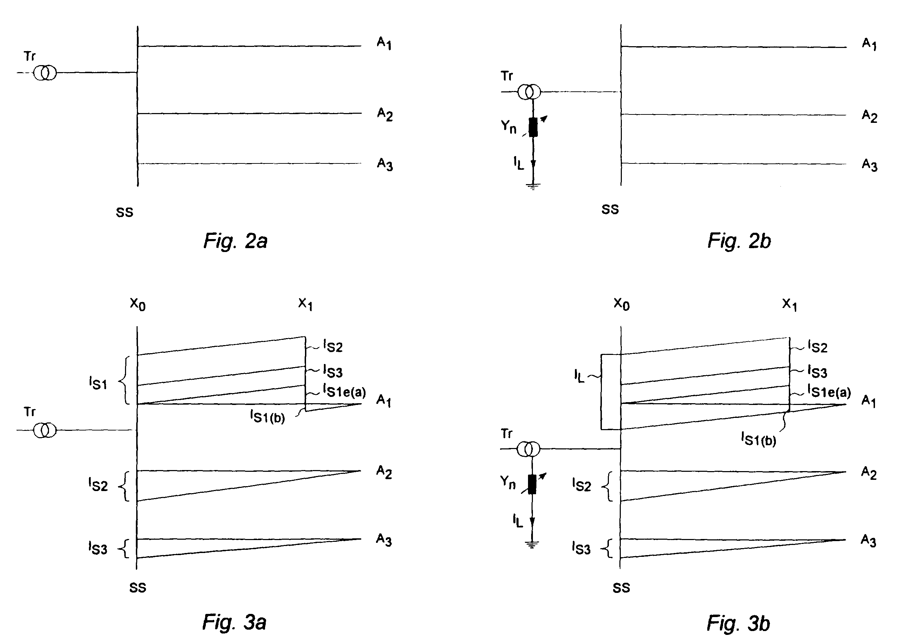

Das Hochspannungsnetz der Fig.2a und 2b umfaßt einen einspeisenden Transformator Tr, eine Sammelschiene SS und drei von der Sammelschiene abgehende Stichleitungen $A_1$, $A_2$ und $A_3$. Grundsätzlich ist das erfindungsgemäße Verfahren von der speziellen Netzstruktur - Stichleitungen oder vermaschte Leitungen - sowie von der Anzahl der angeschlossenen Leitungen unabhängig, zur Vereinfachung der Darstellung sind nur drei Stichleitungen gezeigt.

In den Fig.2a, 3a und 4a ist der Sternpunkt des Netzes von der Erde isoliert, und in den Fig.2b, 3b und 4b ist der Sternpunkt über eine Erdschlußlöschspule der Admittanz $Y_N$ induktiv geerdet.

In Fig.3a ist ein einpoliger Erdschluß an der Stelle $X_1$ auf dem Leitungsabgang $A_1$ angenommen. Am Ort $X_1$ bildet sich ein kapazitiver Erdschlußstrom aus, der sich aus den von den Leitungs-Erdkapazitäten herrührenden Summenströmen $I_{Si}$ der Leitungsabgänge $A_1$, $A_2$ und $A_3$ zusammensetzt. Unter der Annahme einer homogenen Leitungskapazität jedes Leitungsabganges $A_1$, $A_2$, $A_3$ gegenüber Erde weist der Summenstrom $I_{Si}$ entlang einer Leitung einen linearen Verlauf auf. Der Eigenanteil des Summenstromes $I_{Si}$ des erdschlußbehafteten Leitungsabganges $A_1$ ist an beiden Leitungsenden Null und nimmt bei Annäherung an den Ort $X_1$ des Erdschlusses stetig zu. Der Fehlerstrom an der Erdschlußstelle $X_1$ setzt sich aus den von beiden Seiten herrührenden Summenströmen $I_{S1(a)}(X_1)$ und $I_{S1(b)}(X_1)$ zusammen. $I_{S1(a)}(X_1)$ beinhaltet den Eigenanteil $I_{S1e(a)}(X_1)$ der Leitung bis zum Fehlerort sowie die beiden Summenströme $I_{S2}$ und $I_{S3}$ der Stichleitungen $A_2$ und $A_3$, $I_{S1(b)}(X_1)$ besteht aus dem Eigenanteil der Leitung $A_1$ vom Fehlerort bis zum stationsfernen Leitungsende.

Wird der Sternpunkt des Transformators gemäß Fig.3b über eine Erdschlußlöschspule geerdet, die auf Resonanz mit der Erdkapazität des Hochspannungnetzes abgestimmt ist, so fließt ein induktiver Strom $I_L$ von der Löschspule zur Erdschlußstelle, der den kapazitiven Erdschlußstrom an der Erdschlußstelle kompensiert. In Fig.3b ist der zusätzlich fließende induktive Strom $I_L$ eingetragen.

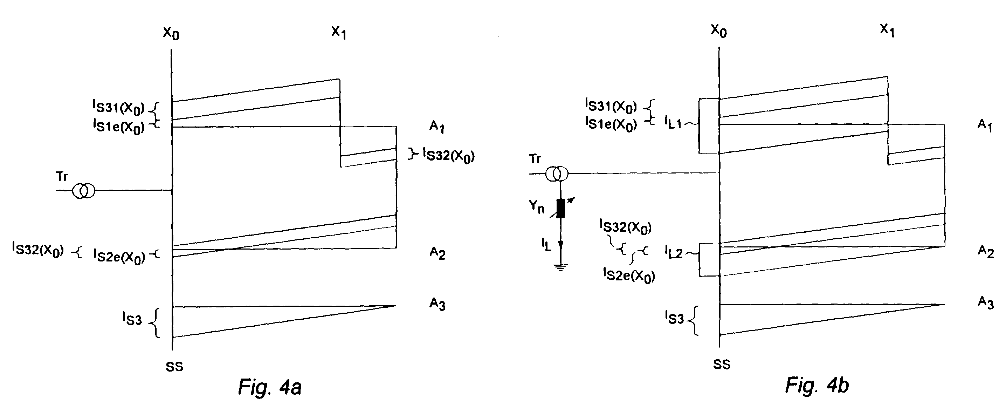

Zur Abstimmung der Erdschlußlöschspule wird nun die fehlerbehaftete Leitung $A_1$ mit einer der anderen Leitungen, beispielsweise der Leitung $A_2$, durch Zusammenschluß der sammelschienenfernen Leitungsenden zu einem Ring verbunden. Dadurch ändert sich die Summenstromverteilung, wie dies in den Fig.4a bzw. 4b dargestellt ist.

In Fig.4a ist die Summenstromverteilung für den Fall des Netzes mit isoliertem Sternpunkt eingezeichnet. Durch die Ringbildung ist der Eigenanteil $I_{S1e}(X_0)$ des Summenstromes $I_{S1}(X_0)$ der Leitung $A_1$ am Ort $X_0$ an der Sammelschiene nun nicht mehr Null, sondern wird dort von einem Ausgleichsstrom von der Leitung $A_2$ gespeist. Die Größe dieses Ausgleichsstromes ist von der Entfernung $X_1$ der Erdschlußstelle auf der Leitung $A_1$ zur Sammelschiene SS abhängig. Nur für den Fall, daß die Erdschlußstelle sich genau an der Ringmitte befindet, verschwindet der Ausgleichsstrom.

Der von der nicht in den Ring einbezogenen Leitung $A_3$ zur Erdschlußstelle fließende Summenstrom $I_{S3}$ teilt sich am Eingang der Leitungen $A_1$ und $A_2$ reziprok zu den Längsimpedanzen dieser Leitungen bis zum Erdschlußort $X_1$ in zwei Teilströme $I_{S31}(X_0)$ und $I_{S32}(X_0)$ auf.

Im Falle des mit einer Erdschlußlöschspule betriebenen Netzes nach Fig.4b teilt sich der zur Erdschlußstelle $X_1$ fließende induktive Kompensationsstrom $I_L$ in gleicher Weise in die Teilströme $I_{L1}$ und $I_{L2}$ auf.

Resonanzabstimmung liegt vor, wenn der Erdschlußstrom an der Erdschlußstelle Null ist. Dies ist genau dann der Fall, wenn die in die beiden zu einem Ring verbundenen Leitungen $A_1$ und $A_2$ fließende Summenströme $I_{S1}$ und $I_{S2}$ am Ort $X_0$ der Sammelschiene genau gleich groß sind. Die Resonanzabstimmung der Erdschlußlöschspule wird erreicht, indem die Spule so abgestimmt wird, daß die Summenströme $I_{S1}(X_0)$ und $I_{S2}(X_0)$ gleich groß sind.

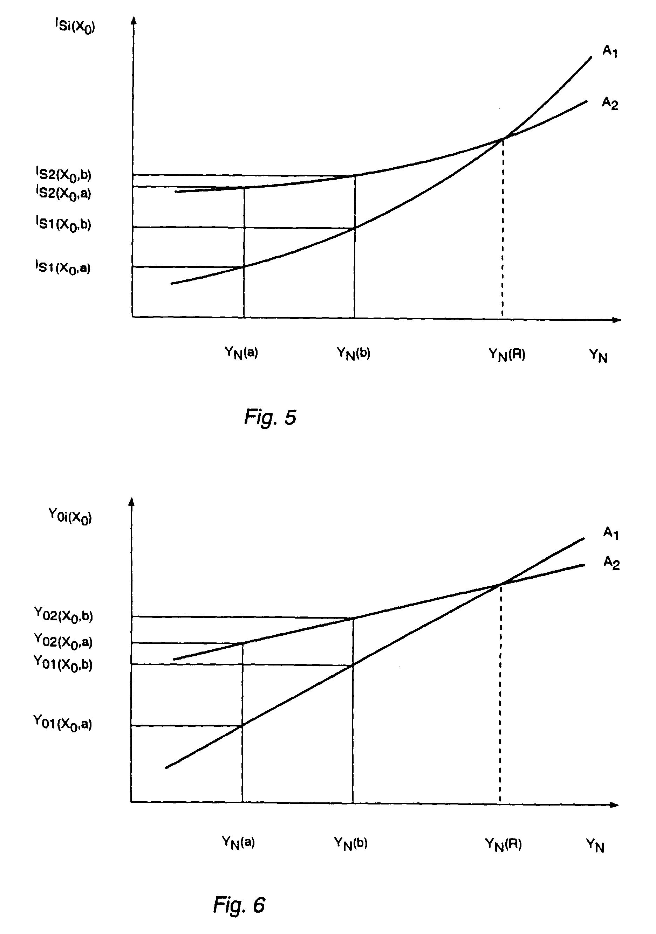

In Fig.5 ist die Abhängigkeit der Summenströme $I_{S1}(X_0)$ und $I_{S2}(X_0)$ von der Admittanz $Y_N$ der Erdschlußlöschspule dargestellt. Die Admittanz der Erdschlußlöschspule für Resonanzabstimmung, bezeichnet mit $Y_N(R)$, ergibt sich am Schnittpunkt der beiden Summenstromkurven.

Die Abweichung der Kurven von einer Geraden ist auf den Einfluß der Impedanz des Erdschlusses zurückzuführen. Je hochohmiger der Erdschluß ist, desto stärker ist die Abweichung. Der Einfluß der Erdschlußimpedanz kann kompensiert werden, indem die Summenströme $I_{S1}(X_0)$ und $I_{S2}(X_0)$ auf die jeweilige Sternpunktspannung $U_{EN}$ bezogen dargestellt werden. Dieser Quotient aus Summenstrom $I_{Si}(X_0)$ am Ort $X_0$ der Leitung und Sternpunktspannung wird entsprechend seiner Dimension als Null-Admittanz $Y_i(X_0)$ bezeichnet und ist in Abhängigkeit von der Admittanz $Y_N$ der Erdschlußlöschspule in Fig.6 dargestellt. Es zeigt sich, daß die Null-Admittanz der Leitung zu der Admittanz der Löschspule linear proportional ist.

Der Schnittpunkt der beiden Geraden von $Y_{01}(X_0)$ und $Y_{02}(X_0)$ ergibt wieder die Admittanz $Y_N(R)$ der Erdschlußlöschspule für den Fall der Resonanz-Abstimmung.

Die Geradeneigenschaft der Null-Admittanzfunktionen $Y_{01}(X_0)$ und $Y_{02}(X_0)$ bietet die Möglichkeit, ihren Schnittpunkt auf einfache Weise zu bestimmen: Bei zwei vorgegebenen Werten $Y_N(a)$, $Y_N(b)$ der Löschspulenadmittanz $Y_N$ werden die Werte der Null-Admittanz $Y_{0i}(X_0)$ jeder Leitung $A_1$ und $A_2$ gemessen, daraus zwei Wertepaare bzw. Punkte $(Y_{01}(X_0, a), Y_N(a))$ und $(Y_{01}(X_0, b), Y_N(b))$ der Null-Admittanzgeraden der Leitung $A_1$ und zwei Wertepaare bzw. Punkte $(Y_{02}(X_0, a), Y_N(a))$ und $(Y_{02}(X_0, b), Y_N(b))$ der Null-Admittanzgeraden der Leitung $A_2$ gebildet, in bekannter Weise die Geradengleichungen aufgestellt und ihr Schnittpunkt bestimmt.

Die Steigung der Geraden $Y_{0i}(X_0)$ ist von der Entfernung der Erdschlußstelle $X_1$ vom Meßpunkt auf der Sammelschiene abhängig und umso größer, je geringer die Entfernung ist. Die Steigungen $S_1$ und $S_2$ der beiden Null-Admittanzgeraden lassen sich in bekannter Weise ermitteln. Der Ort $X_1$ des Erdschlusses ergibt sich dann aus der Gleichung

$$\frac{X_1}{X_2} = \frac{S_2}{S_1} \qquad (\text{mit } X_2 = l_1 - X_1 + l_2),$$

wobei $l_1$ die Länge der Leitung $A_1$ und $l_2$ die Länge der Leitung $A_2$ ist. Daraus ergibt sich $X_1$ mit

$$X_1 = \frac{(l_1 + l_2)\, S_2}{S_1 + S_2}$$

Die beiden Werte $Y_N(a)$ und $Y_N(b)$ der Löschspulenadmittanz, bei denen die genannten Null-Admittanzen gemessen werden, werden durch geringfügiges Verstimmen der Erdschlußlöschspule eingestellt.

Das erfindungsgemäße Verfahren läßt sich auch bei vermaschten Netzstrukturen anwenden, d.h. bei Netzen, bei denen mehrere Leitungsabgänge an ihren sammelschienenfernen Enden dauerhaft zu einem Ring verbunden sind, beispielsweise um die an einen Leitungsabgang angeschlossenen Verbraucher bei einer Unterbrechung dieses Leitungsabganges über die Ringverbindung vom anderen Leitungsabgang her versorgen zu können, wie dies bei neueren ausfallsicheren Versorgungsnetzen vorgesehen ist. In diesem Fall vereinfacht sich die Ausführung des ersten Schrittes des erfindungsgemäßen Verfahrens zu der bloßen Heranziehung einer mit der fehlerbehafteten Leitung bereits zu einem Ring zusammengeschalteten zweiten Leitung.

## Patentansprüche

1. Verfahren zur Resonanzabstimmung der Erdschlußlöschspule eines gelöscht betriebenen Drehstromnetzes im Falle eines einpoligen Erdschlusses auf einer der von einer Sammelschiene abgehenden Leitungen, dadurch gekennzeichnet, daß die fehlerbehaftete Leitung ($A_1$) am sammelschienenfernen Leitungsende mit einer zweiten, von der Sammelschiene (SS) abgehenden Leitung ($A_2$) zu einem Ring zusammengeschaltet wird, und daß die Summenströme ($I_{S1}(X_0)$, ($I_{S2}(X_0)$) der beiden Leitungen am sammelschienenseitigen Leitungsende ($X_0$) in Abhängigkeit von einer Verstimmung der Admittanz ($Y_N$) der Erdschlußlöschspule gemessen und verglichen werden, wobei eine Übereinstimmung der Summenströme die Resonanzabstimmung ($YN(R)$) der Erdschlußlöschspule angibt.

2. Verfahren nach Anspruch 1, dadurch gekennzeichnet, daß die Summenströme ($I_{S1}(X_0)$, $I_{S2}(X_0)$) der beiden Leitungen ($A_1$, $A_2$) am sammelschienenseitigen Leitungsende ($X_0$) bei zumindest zwei unterschiedlichen, ausgewählten Werten ($Y_N(a)$, $Y_N(b)$) der Admittanz der Erdschlußlöschspule gemessen und auf die jeweilige Sternpunktspannung ($U_{EN}$) der betreffenden Leitung bei diesem Admittanzwert quotentiell bezogen werden, daß die erhaltenen Meßwertepaare (($Y_{01}(X_0,a)$, $Y_N(a)$); ($Y_{0i}(X_0,b)$, $Y_N(b)$); i=1,2) jeder Leitung ($A_i$) zur Aufstellung einer von der Admittanz ($Y_N$) der Erdschlußlöschspule abhängigen Geradenfunktion für jede Leitung herangezogen werden, und daß der Schnittpunkt dieser beiden Geradenfunktionen ($Y_{0i}(X_0)$, $Y_{02}(X_0)$) ermittelt wird, welcher den Admittanzwert ($Y_N(R)$) für die Resonanzabstimmung der Erdschlußlöschspule angibt.

3. Verfahren nach Anspruch 2, dadurch gekennzeichnet, daß aus dem Verhältnis der Steigung ($S_2$) der Geradenfunktion für die fehlerfreie Leitung (A2) zu der Summe der Steigungen ($S_1$, $S_2$) der Geradenfunktionen beider Leitungen ($A_1$, $A_2$) der Ort ($X_1$) des Erdschlusses auf der fehlerbehafteten Leitung

($A_1$) bestimmt wird.

## Claims

1. A method of resonance-matching the earth leakage discharge coil [Petersen coil] of an earthed three-phase system in the event of a single-line-to-earth fault on one of the lines leaving a bus bar, characterized in that the faulty line ($A_1$), at its end remote from the bus bar, is connected up to another line ($A_2$) leaving the bus bar (SS), to form a ring, and in that the total currents ($I_{S1}(X_O)$), ($I_{S2}(F_O)$) of the two lines are measured at the end ($X_O$) of the line nearest the bus bar, and compared as a function of the admittance ($Y_N$) of the earth leakage discharge coil [Petersen coil], whereby correspondence between the total currents yields the resonance-matched state ($Y_N(R)$) of the earth leakage discharge coil [Petersen coil].

2. A method according to Claim 1, characterized in that the total currents ($I_{S1}(F_O)$), ($I_{S2}(F_O)$) of the two lines ($A_1$, $A_2$) are measured at the end ($X_O$) of the line nearest the bus bar with at least two different selected values ($Y_N(a)$, $Y_N(b)$) of the admittance of the earth leakage discharge coil [Petersen coil], and are proportionally allocated to the star point voltage $U_{EN}$ of the respective line at this admittance, in that the resulting pairs of measured values (($Y_{Oi}(X_O,a)$, $Y_N(a)$); ($Y_{Oi}(X_O,b)$, $Y_N(b)$); i = 1,2) of each line ($A_i$) are employed for setting up for each line a respective linear function dependent on the admittance ($Y_N$) of the earth leakage discharge coil [Petersen coil], and in that the point of intersection of these two linear functions ($Y_{O1}(X_O)$, $Y_{O2}(F_O)$) is determined, and gives the admittance value ($Y_N(R)$) for the resonance-matching of the earth leakage discharge coil [Petersen coil].

3. A method according to Claim 2, characterized in that the location ($X_1$) of the short circuit to earth in the faulty line ($A_1$) is determined from the ratio of the slope ($S_2$) of the linear function for the sound line ($A_2$) to the sum of the slopes ($S_1$, $S_2$) of the linear functions of the two lines ($A_1$, $A_2$).

## Revendications

1. Procédé d'adaptation de résonance pour bobines de prise de terre Petersen d'un réseau triphasé exploité en mode éteint, dans le cas d'un contact ou mise à la terre unipolaire sur l'une des conduites partant d'une barre collectrice ou barre omnibus, caractérisé en ce que la conduite défectueuse ($A_1$) est interconnectée à l'extrémité de la conduite éloignée de la barre omnibus par une deuxième conduite ($A_2$) partant de la barre omnibus (SS) formant ainsi une interconnexion ou boucle ou anneau, et en ce que les courants cumulés ($I_{S1}(X_O)$), ($I_{S2}(X_O)$) des deux conduites sur l'extrémité de conduite ($X_O$) sur le côté de la barre omnibus sont mesurés et comparés en fonction d'un désaccord ou défaut de résonance de l'admittance ($Y_N$) de la bobine de prise de terre Petersen de sorte qu'une concordance des courants cumulés donne l'adaptation de résonance ($Y_N(R)$) de la bobine de prise de terre Petersen.

2. Procédé selon la revendication 1, caractérisé en ce que l'on mesure les courants cumulés ($I_{S1}(X_O)$), ($I_{S2}(X_O)$) des deux conduites ($A_1$, $A_2$) sur l'extrémité de conduite ($X_O$) sur le côté de la barre collectrice ou barre omnibus pour au moins deux valeurs sélectionnées différentes ($Y_N(a)$, ($Y_N(b)$) de l'admittance de la bobine de prise de terre Petersen et en ce qu'ils sont rapportés à la tension neutre respective ($U_{EN}$) de la conduite concernée à cette valeur d'admittance de façon proportionnelle, en ce que les couples de valeurs de mesures obtenus (($Y_{Oi}(X_O, a)$, $Y_N(a)$) ; (($Y_{Oi}(X_O,b)$, $Y_N(b)$)) ; i = 1,2 de chaque conduite ($A_i$) sont utilisés pour établir une fonction linéaire dépendante de l'admittance ($Y_N$) de la bobine de prise de terre Petersen pour chaque conduite, et en ce que l'on détermine l'intersection de ces deux fonctions linéaires ($Y_{O1}(X_O)$, ($Y_{O2}(X_O)$) qui donne la valeur d'admittance ($Y_N(R)$) pour l'adaptation de résonance de la bobine de prise de terre Petersen.

3. Procédé selon la revendication 2, caractérisé en ce qu'à partir du rapport entre la pente ($S_2$) de la fonction linéaire pour la conduite défectueuse ($A_2$) et la somme des pentes ($S_1$, $S_2$) des fonctions linéaires des deux conduites ($A_1$, $A_2$), on détermine le lieu ($X_1$) du contact ou de la mise à la terre sur la conduite défectueuse ($A_1$).

*Fig. 1*

Fig. 2b

Fig. 2a

Fig. 3b

Fig. 3a

7

$X_0$   $X_1$

$I_{S31(X_0)}$
$I_{S1e(X_0)}$

$A_1$

$} I_{S32(X_0)}$

Tr

$I_{S32(X_0)} \{ I_{S2e(X_0)}$   $A_2$

$I_{S3} \{$   $A_3$

SS

*Fig. 4a*

$X_0$   $X_1$

$I_{S31(X_0)} \{$
$I_{S1e(X_0)} \{ I_{L1}$

$A_1$

Tr

$Y_n$

$I_L$

$I_{S32(X_0)}$
$\} \{ I_{L2}$   $A_2$
$I_{S2e(X_0)}$

$I_{S3} \{$   $A_3$

SS   *Fig. 4b*

Fig. 5

Fig. 6